(19) Europäisches Patentamt
European Patent Office
Office européen des brevets

(11) **EP 3 036 728 B1**

(12) **EUROPÄISCHE PATENTSCHRIFT**

(45) Veröffentlichungstag und Bekanntmachung des Hinweises auf die Patenterteilung:
**30.06.2021 Patentblatt 2021/26**

(21) Anmeldenummer: **14753274.1**

(22) Anmeldetag: **22.08.2014**

(51) Int Cl.:
*G08G 1/09* (2006.01)      *G08G 1/0967* (2006.01)
*G08G 1/16* (2006.01)      *H04W 72/04* (2009.01)
*H04L 29/08* (2006.01)      *H04W 84/18* (2009.01)

(86) Internationale Anmeldenummer:
**PCT/EP2014/067938**

(87) Internationale Veröffentlichungsnummer:
**WO 2015/025046 (26.02.2015 Gazette 2015/08)**

(54) **EMPFANGSDATENREDUKTION IN EINEM V2X-NETZWERK BASIEREND AUF EMPFANGSSIGNALSTÄRKE**

REDUCING RECEIVED DATA IN A V2X NETWORK BASED ON RECEIVED SIGNAL STRENGTH

RÉDUCTION DES DONNÉES DE RÉCEPTION DANS UN RÉSEAU V2X SUR LA BASE DE L'INTENSITÉ D'UN SIGNAL DE RÉCEPTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.08.2013 DE 102013216624**

(43) Veröffentlichungstag der Anmeldung:
**29.06.2016 Patentblatt 2016/26**

(73) Patentinhaber: **Continental Teves AG & Co. OHG 60488 Frankfurt am Main (DE)**

(72) Erfinder:
• GROTENDORST, Thomas
  65760 Eschborn (DE)
• MENZEL, Marc
  35096 Weimar (Lahn) (DE)
• SCHERPING, Richard
  65835 Liederbach am Taunus (DE)
• STÄHLIN, Ulrich
  65760 Eschborn (DE)

(74) Vertreter: **Continental Corporation c/o Conti Temic microelectronic GmbH Intellectual Property Sieboldstraße 19 90411 Nürnberg (DE)**

(56) Entgegenhaltungen:
EP-A1- 2 178 064      WO-A2-2009/158227
DE-A1-102006 029 525      US-A1- 2013 083 679

• "Broadcast storm mitigation techniques in vehicular ad hoc networks", IEEE WIRELESS COMMUNICATIONS, IEEE SERVICE CENTER, PISCATAWAY, NJ, US, Bd. 14, Nr. 6, 1. Dezember 2007 (2007-12-01), Seiten 84-94, XP011199024, ISSN: 1536-1284

EP 3 036 728 B1

**Beschreibung**

Die Erfindung betrifft ein Verfahren zum Filtern eines in einem Fahrzeug-Ad-hoc-Netzwerk übertragenen Übertragungssignals, das wenigstens Positionsdaten zu Teilnehmern in einem Fahrzeug-Ad-Hoc-Netzwerk in Datenpaketen trägt, eine Filtervorrichtung zur Durchführung des Verfahrens und einen Empfänger mit der Filtervorrichtung.

Aus der WO 2010 / 139 526 A1 ist ein Car2X genanntes mobiles Ad-hoc-Netz bekannt, dessen Knoten bestimmte Straßenverkehrsteilnehmer wie Fahrzeuge oder andere Objekte im Straßenverkehr, wie Ampeln sind. Über diese Netzwerke können den am Car2X-Netzwerk beteiligten Straßenverkehrsteilnehmern Hinweise über Straßenverkehrszustände, wie Unfälle, Staus, Gefahrensituationen, ... bereitgestellt werden.

Weiterhin ist aus der US 2013/0083679 A1 ein mobiles Netzwerk bekannt, bei dem Datenpakete nach einer vorbestimmten Empfangsvorschrift gefiltert werden, wobei das Übertragungssignal eine Mindestfeldstärke besitzen muss, um demoduliert zu werden.

Aufgabe der Erfindung ist es, die Nutzung derartiger mobiler Ad-hoc-Netze zu verbessern.

Die Aufgabe wird durch die Merkmale der unabhängigen Ansprüche gelöst. Bevorzugte Weiterbildungen sind Gegenstand der abhängigen Ansprüche.

Dem angegebenen Verfahren liegt die Überlegung zugrunde, dass in einem Fahrzeug-Ad-hoc-Netzwerk je nach Verkehrssituation eine unterschiedlich hohe Datenlast anfallen kann, die dann von den entsprechenden Empfängern in den am Fahrzeug-Ad-hoc-Netzwerk teilnehmenden Fahrzeugen verarbeitet werden muss. Die im Fahrzeug-Ad-hoc-Netzwerk zu versendenden Daten werden grob gesagt zunächst auf Datenpakete verteilt, die dann wiederrum auf ein Übertragungssignal moduliert werden. Entsprechend muss ein Empfänger der versendeten Daten zunächst die Datenpakete aus dem Übertragungssignal filtern und dann die Datenpakete zu den versendeten Daten zusammensetzen. Erst dann können die versendeten Daten verarbeitet werden.

Für die Verarbeitung der versendeten Daten muss dann je nach aufkommender Datenlast eine entsprechende Rechenleistung bereitgestellt werden, die sich im Extremfall an der maximal möglichen Kanallast orientiert. Die maximal mögliche Kanallast wird aber nur in besonders extremen Situationen, wie beispielsweise sehr hohen Verkehrsaufkommen (Stau, ...) ausgenutzt. In derartigen Situationen wäre es aber nicht notwendig alle im Fahrzeug-Ad-hoc-Netzwerk versendeten Daten auszuwerten, weil für das betreffende Fahrzeug nur ein Teil dieser versendeten Daten relevant ist.

Um zu entscheiden, welche der versendeten Daten relevant sind oder nicht, müssten diese aber zunächst mit einer entsprechend hohen Rechenleistung aus dem Übertragungssignal und den darin enthaltenen Datenpaketen zusammengesetzt werden. Weil die versendeten Daten neben den Positionsdaten in der Regel weitere Daten, wie Zeitstempel, Verkehrszustandsmeldungen oder andere Botschaften enthalten, ist allein der Rechenaufwand für das Zusammensetzen der versendeten Datenpakete im oben genannten Extremfall enorm hoch, ohne dass irgendeine Bewertung der versendeten Daten getroffen wurde. Hinzu kommt, dass die versendeten Daten je nach Datenart bei gleicher Menge unterschiedlich aufwändige Verarbeitungsschritte erfordern können, was die Bestimmung der maximal bereitzuhaltenden Rechenlast weiter erschwert. Dies lässt sich beispielsweise an Daten, wie Staumeldungen beobachten, die an Fahrzeuge weitergeleitet werden sollen, die sich noch nicht in direkter Kommunikationsreichweite eines zu kommunizierenden Ereignisses befinden.

Hier greift das angegebene Filterverfahren mit der Überlegung an, die versendeten Daten nicht erst nach dem Zusammensetzen der Datenpakete zu den versendeten Daten sondern bereits vor dem Zusammensetzen entweder auf der Ebene des Übertragungssignals und/oder auf der Ebene der Datenpakete zu bewerten. Hierzu wird eine vorbestimmte Bedingung eingeführt, anhand derer entschieden werden kann, ob die mit dem Übertragungssignal und den Datenpaketen versendeten Daten als relevant erachtet oder verworfen werden.

Ein derartiger Ansatz ist bereits aus der Objekterkennung mit einem Kamerasystem bekannt, auf dessen Grundlage ebenfalls teils verkehrssicherheitskritische Entscheidungen getroffen werden müssen. Die Datenmenge einer der Objekterkennung zugrundeliegenden Kamera ist so hoch, dass die unmittelbare Pixeldatenmenge aus der Kamera nicht direkt für alle notwendigen Objekterkennungen verwendet werden kann. So werden die notwendigen Informationen aus der Pixeldatenmenge in Zwischenstufen gesammelt und immer weiter verdichtet. So können in einer ersten Zwischenstufe beispielsweise aus der Pixeldatenmenge bestimmte Objekt- und Szeneninformationen gesammelt werden wie beispielsweise ob die Fahrspur links und/oder rechts vom Fahrzeug ist. Wird in einer Zwischenstufe jedoch eine falsche Entscheidung getroffen, so schlägt sich diese falsche Entscheidung in allen nachstehenden Zwischenstufen nieder und führt dazu, dass relevante Objekte oder Szenen möglicherweise nicht als solche erkannt werden. Über die Zeit ist jedoch die bestmögliche Erkennung aller relevanten Objekte sichergestellt, weil stets eine Abwägung zwischen Rechenaufwand und Erkennungsleistung durchgeführt wird.

Mit der Erkenntnis, dass die Pixel aus der Kamera wie die Datenpakete in dem Fahrzeug-Ad-hoc-Netzwerk für das Verarbeitungssystem im Fahrzeug eine Art Rohdaten darstellen, kann das Prinzip der Objekterkennung mit einem Kamerasystem auch auf die Informationsübermittlung mit dem Fahrzeug-Ad-hoc-Netzwerk übertragen werden, wobei die Auswahl der relevanten Daten in bereits erläuterter Weise auf der Ebene des Übertragungssignals und/oder der Datenpakete durchgeführt wird. Zwar ist auf diese Weise nicht mehr sichergestellt, dass alle wichtigen Datenpakete auch zu den entsprechenden versendeten Daten zusammengesetzt werden, es ist jedoch davon auszugehen, dass entsprechende Datenpakete, wie beispielsweise von einem Liegenbleiber auf der Straße häufiger versendet werden. Durch die sich ändernden Randbedingungen zwischen zwei versendeten Datenpaketen mit denselben versendeten Daten desselben Senders ist im statistischen Mittel davon auszugehen, dass die Datenpakete rechtzeitig das durch die vorbestimmte Bedingung definierte Filter passieren, so dass das entsprechende Fahrzeug reagieren kann. Wie bei der oben genannten Objekterkennung mit dem Kamerasystem wird damit im Rahmen der vorliegenden Erfindung vorgeschlagen zwischen Rechenaufwand und Erkennungsleistung abzuwägen. Dies wird mit der vorbestimmten Bedingung umgesetzt, die zweckmäßigerweise über die Zeit verändert wird, um zwischen dem Rechenaufwand und der Erkennungsleistung abzuwägen.

Erfindungsgemäß umfasst die vorbestimmte Bedingung eine Mindestsignalstärke, die das Übertragungssignal des zu demodulierenden Datenpaketes besitzen muss. Dem liegt die Überlegung zugrunde, dass Übertragungssignale weiter entfernterer Fahrzeuge oder anderer Teilnehmer des Fahrzeug-Ad-hoc-Netzwerks am Empfänger mit einer geringeren Signalstärke ankommen, als Übertragungssignale von sich näher am Empfänger befindlichen Teilnehmern. Da das Fahrzeug aus sicherheitstechnischer Sicht auf unmittelbar in der Nähe befindliche Teilnehmer, wie Fahrzeuge, Ampeln, ... eher reagieren muss, als auf weiter entfernt gelegene Teilnehmer, wird durch das Wählen einer Mindestsignalstärke in der vorbestimmten Bedingung die Sicherheit im Straßenverkehr nicht gefährdet. Möglicherweise werden dann Botschaften wie Staumeldungen im Fahrzeug-Ad-hoc-Netzwerk nicht mehr weitergeleitet. Dies ist jedoch für die Sicherheit im Straßenverkehr zunächst nur untergeordnet relevant.

Erfindungsgemäß ist vorbestimmte Bedingung und damit die Mindestsignalstärke von einer Verarbeitungslast des Empfangsfilters und/oder der Verarbeitungslast der Datenverarbeitungseinrichtung abhängig · Das heißt, wenn die die versendeten Daten aus den Datenpaketen zusammensetzende und diese verarbeitende Datenverarbeitungseinrichtung zu einem bestimmten Prozentsatz ausgelastet ist, könnte durch Erhöhen der Mindestsignalstärke der Radius der empfangbaren Daten aus dem Fahrzeug-Ad-hoc-Netzwerk eingeschränkt werden, um den Prozentsatz wieder unterhalb eines bestimmten Sollprozentsatzes zu führen. Die variable Einstellung der vorbestimmten Bedingung und insbesondere der Mindestsignalstärke stellt sicher, dass in der Langzeitbetrachtung eine verlässliche Begrenzung der Verarbeitungslast bei gleichzeitiger optimaler Verwendung aller verfügbarer Rechenressourcen gegeben ist. Ferner wird durch die variable Einstellung der vorbestimmten Bedingung und insbesondere der Mindestsignalstärke auch sichergestellt, dass in Situationen mit geringer Kanallast und damit Verarbeitungslast für den Empfangsfilters und/oder die Datenverarbeitungseinrichtung nicht unnötig viele versendete Daten ausgefiltert werden.

In einem Beispiel wird die Abhängigkeit der vorbestimmten Bedingung und insbesondere der Mindestsignalstärke von der Verarbeitungslast des Empfangsfilters und/oder der Datenverarbeitungseinrichtung geregelt. Dieser Regelung kann beispielsweise ein bestimmter Prozentsatz für die Verarbeitungslast als Führungsgröße zugrundegelegt werden. Über die Filterung als Stellgröße kann dann die Verarbeitungslast als Istgröße der Regelung eingestellt werden. Damit wäre die oben genannte vorbestimmte Bedingung und insbesondere die Mindestsignalstärke in dieser Regelung die Stellgröße selbst oder geht zumindest in diese ein. Mit anderen Worten werden die vorbestimmte Bedingung und insbesondere die Mindestsignalstärke nicht direkt eingestellt sondern indirekt über die Führungsgröße. Die Führungsund Istgröße sind selbstverständlich nicht auf das Beispiel in dieser Weiterbildung beschränkt sondern können applikationsabhängig beliebig gewählt werden. Ferner sollte bei einer Auslegung des Reglers Verzögerungen, wie beispielsweise Totzeiten, berücksichtigt werden, die durch die Trägheit der Kommunikationshardware beim Empfang des Übertragungssignals und bei der Demodulation der Datenpakete in das System eingebracht wird.

In einer anderen Weiterbildung des angegebenen Verfahrens kann die Mindestsignalstärke von wenigstens einem Normwert für das Übertragungssignal in einem vorbestimmten Zeitfenster abhängig sein. Derartige Normwerte sind bestens bekannt, weil sie die Wirkung eines Wechselsignals und damit des Übertragungssignal über die Zeit beschreiben. Beispiele für Normwerte sind statistische Größen wie Maximal-, Mittel- und Minimalwerte des Signalpegels des Übertragungssignals. Wird die Mindestsignalstärke anhand eines geeigneten Normwertes betrachtet, können so bei Festlegung der Mindestsignalstärke auch weitere Randbedingungen mit berücksichtigt werden. So könnte beispielsweise die Empfangssituation in einer Innenstadt von einer Empfangssituation auf dem Land getrennt werden, wenn beispielsweise der Signalpegel des Übertragungssignals genormt auf den Abstand zwischen Maximalwert und Minimalwert für den Signalpegel des Übertragungssignals, auf den Mittelwert des Signalpegels des Übertragungssignals oder genormt auf den Median des Signalpegels des Übertragungssignals betrachtet wird.

In einer anderen Weiterbildung des angegebenen Verfahrens wird die Mindestsignalstärke derart gewählt, dass in dem vorbestimmten Zeitfenster eine vorbestimmte Anzahl an Datenpaketen aus dem Übertragungssignal ausgewählt werden, die vom Übertragungssignal in dem Zeitfenster mit den höchsten Signalstärken übertragen werden. Auf diese Weise ist sichergestellt, dass immer die maximal mögliche Anzahl Datenpaketen weiterverarbeitet wird, wie es die Rechenleistung des Empfangsfilters und/oder der Datenverarbeitungseinrichtung erlaubt.

In einer anderen Weiterbildung des angegebenen Verfahrens werden die Datenpakete zunächst basierend auf der von der Verarbeitungslast abhängigen Mindestsignalstärke und danach basierend auf einer weiteren von dem Normwert abhängigen Mindestsignalstärke gefiltert. Mit anderen Worten kann die Filterung gestuft erfolgen, wobei zunächst beispielsweise zunächst das Übertragungssignal gefiltert werden kann, um alle Datenpakete bereits aus dem Übertragungssignal herauszufiltern, die eine bestimmte Empfangsempfindlichkeit nicht überschreiten. Dabei sollten die vorbestimmte Bedingung und damit die Mindestsignalstärke dieser ersten Filterstufe so ausgelegt sein, dass an der nächsten Filterstufe mehr Datenpakete ankommen, als die Rechenleistung der Datenverarbeitungseinrichtung imstande ist, zu bearbeiten. In der nächsten Filterstufe könnten die Datenpakete dann basierend auf der weiteren Mindestsignalstärke dann an die Rechenleistung der Datenverarbeitungseinrichtung angepasst feingefiltert werden. Hierzu sollte die weitere Mindestsignalstärke größer sein, als die Mindestsignalstärke. In einer besonderen Weiterbildung des angegebenen Verfahrens sollte die Mindestsignalstärke in ihrem Wert ein absolutes Maximum besitzen. Dieses absolute Maximum könnte beispielsweise der minimalen Empfangsempfindlichkeit entsprechen, wie sie in einem das Fahrzeug-Ad-Hoc-Netzwerk definierenden Standard gefordert wird. Ein derartiger Standard ist beispielsweise "Draft C2C-CC Basic System Standards Profile".

Gemäß einem weiteren Aspekt der Erfindung umfasst ein Empfänger für ein Fahrzeug zum Empfangen von in Datenpaketen verpackten Nachrichten mit einem Übertragungssignal in einem Fahrzeug-Ad-Hoc-Netzwerk:

- eine Antenne zum Empfangen des Übertragungssignals,
- eine Filtervorrichtung ausgeführt zur Durchführung eines Verfahrens nach einer der vorstehenden Ausführungen zum Filtern wenigstens eines Teils der Datenpakete aus dem Übertragungssignals, und
- eine Darstellungsvorrichtung ausgeführt zum Extrahieren der Nachrichten aus den gefilterten Datenpaketen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:

Fig. 1 eine Prinzipdarstellung eines auf einer Straße fahrenden Fahrzeuges,

Fig. 2 eine Prinzipdarstellung des Fahrzeuges der Fig. 1,

Fig. 3 eine Prinzipdarstellung eines Fahrzeug-Ad-Hoc-Netzwerkes, an dem das Fahrzeug der Fig. 1 und 2 teilnehmen kann,

Fig. 4 eine Prinzipdarstellung von in dem Fahrzeug-Ad-Hoc-Netzwerk der Fig. 3 übertragenen Signalen,

Fig. 5 eine Prinzipdarstellung von gefilterten Signalen, die aus dem Fahrzeug-Ad-Hoc-Netzwerk der Fig. 3 empfangen wurden,

Fig. 6 eine Prinzipdarstellung von alternativen gefilterten Signalen, die aus dem Fahrzeug-Ad-Hoc-Netzwerk der Fig. 3 empfangen wurden,

Fig. 7a und 7b eine Prinzipdarstellung eines Empfangsfilters zum Filtern des Signals der Fig. 4, und

Fig. 8a und 8b eine Prinzipdarstellung von Datenpaketen, die aus einem über das Fahrzeug-Ad-Hoc-Netzwerk der Fig. 3 empfangenen Signal gefiltert wurden zeigen.

In den Figuren werden gleiche technische Elemente mit gleichen Bezugszeichen versehen und nur einmal beschrieben.

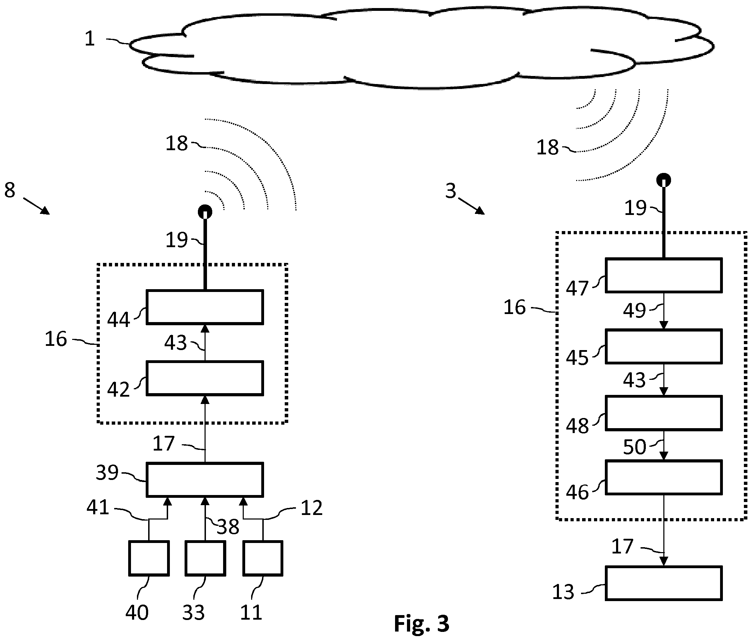

Die Erfindung betrifft ein Netzwerkprotokoll für ein in Fig. 3 gezeigtes Fahrzeug-Ad-Hoc-Netzwerk, das nachstehend der Einfachheit halber Car2X-Netzwerk 1 genannt wird. Zur besseren Verständlichkeit des technischen Hintergrundes zu diesem Car2X-Netzwerk 1 soll zunächst ein nicht einschränkendes Anwendungsbeispiel zu diesem Car2X-Netzwerk 1 gegeben werden, bevor auf technische Einzelheiten zu diesem näher eingegangen wird.

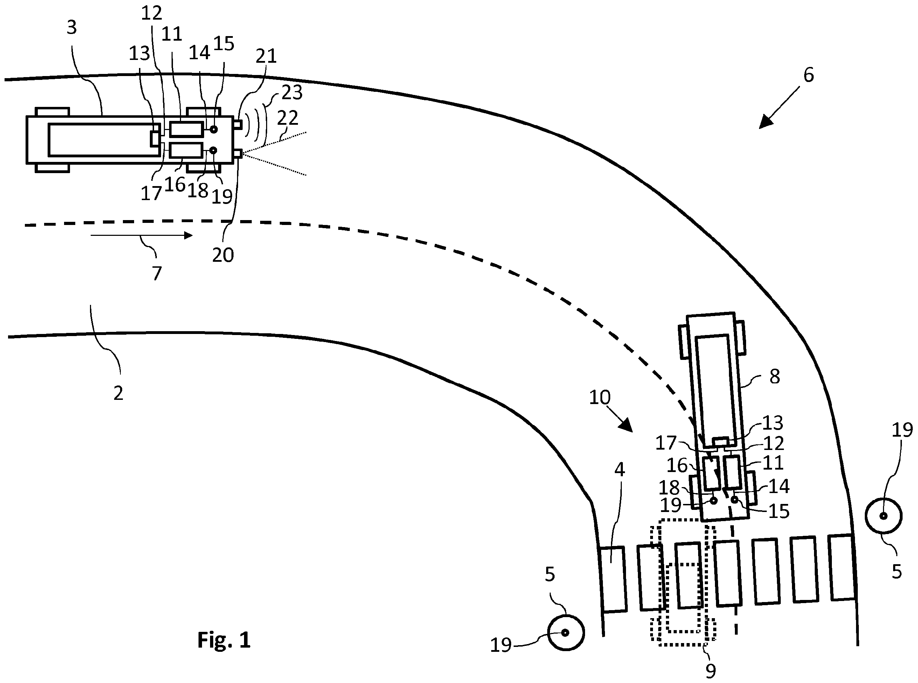

Es wird daher auf Fig. 1 Bezug genommen, die eine Prinzipdarstellung eines auf einer Straße 2 fahrenden Fahrzeuges 3 zeigt.

In der vorliegenden Ausführung soll sich auf der Straße 2 eine Fußgängerüberführung 4 befinden, an der mittels einer Ampel 5 geregelt wird, ob das Fahrzeug 3 oder gegebenenfalls die Fahrzeuge 8 und/oder 9 auf der Straße 2 die Fußgängerüberführung 4 überqueren darf oder ein nicht weiter dargestellter Fußgänger auf der Fußgängerüberführung 4 die Straße 2. Zwischen der Fußgängerüberführung 4 und der Ampel 5 befindet sich im Rahmen der vorliegenden Ausführung ein Hindernis in Form einer Kurve 9, die die Fußgängerüberführung 4 dem Fahrer des Fahrzeuges 3 sowie einer noch zu beschreibenden Umfeldsensorik des Fahrzeuges 3 gegenüber verdeckt.

In einer Fahrtrichtung 7 vor dem Fahrzeug 3 ist in Fig. 1 ein weiteres Fahrzeug 8 dargestellt, das mit einem gepunktet dargestellten Fahrzeug 9 auf der Fußgängerüberführung 4 in einen Verkehrsunfall 10 verwickelt ist und die Fahrspur in Fahrtrichtung 7 des Fahrzeuges 3 blockiert.

Die Fußgängerüberführung 4 und der Verkehrsunfall 10 stellen Gefahrensituationen auf der Straße 2 dar. Übersieht der Fahrer des Fahrzeuges 3 die Fußgängerüberführung 4 und hält vor dieser damit regelwidrig nicht an, so könnte er einen die Fußgängerüberführung 4 überquerenden Fußgänger erfassen, der beim Überqueren der Fußgängerüberführung 4 auf das regelkonforme Verhalten des Fahrers des Fahrzeuges 3 vertraut. In beiden Gefahrensituationen muss der Fahrer des Fahrzeuges 3 das Fahrzeug 3 anhalten, um eine Kollision mit dem Gefahrenobjekt in der Gefahrensituation, also dem Fußgänger und/oder dem weiteren Fahrzeug 8 zu vermeiden. Hierzu kann das Car2X-Netzwerk 1 verwendet werden, worauf an späterer Stelle näher eingegangen wird.

Das Fahrzeug 3 weist in der vorliegenden Ausführung einen Empfänger 11 für ein globales Satellitennavigationssystem, nachstehend GNSS-Empfänger 11 genannt auf, über den das Fahrzeug 3 in einer an sich bekannten Weise Positionsdaten in Form seiner absoluten geographischen Lage 12 bestimmen und beispielsweise im Rahmen eines Navigationssystems 13 nutzen kann, um diese auf einer nicht weiter dargestellten geographischen Karten anzuzeigen. Entsprechende Signale 14 des Globalen Satellitennavigationssystems, nachstehend GNSS-Signale 14 genannt, können beispielsweise über eine entsprechende GNSS-Antenne 15 empfangen und in an sich bekannter Weise an den GNSS-Empfänger 11 weitergeleitet werden.

Das Fahrzeug weist in der vorliegenden Ausführung ferner einen Transceiver 16 auf, über den das Fahrzeug 3 als Knoten am Car2X-Netzwerk 1 teilnehmen und mit anderen Knoten, wie beispielsweise dem weiteren Fahrzeug 8 und/oder der Ampel 5 nachstehend Car2X-Nachrichten 17 genannte Nachrichten austauschen kann. Dieser Transceiver 16 soll zur Abgrenzung gegenüber dem GNSS-Empfänger 11 nachstehend Car2X-Transceiver 16 genannt werden.

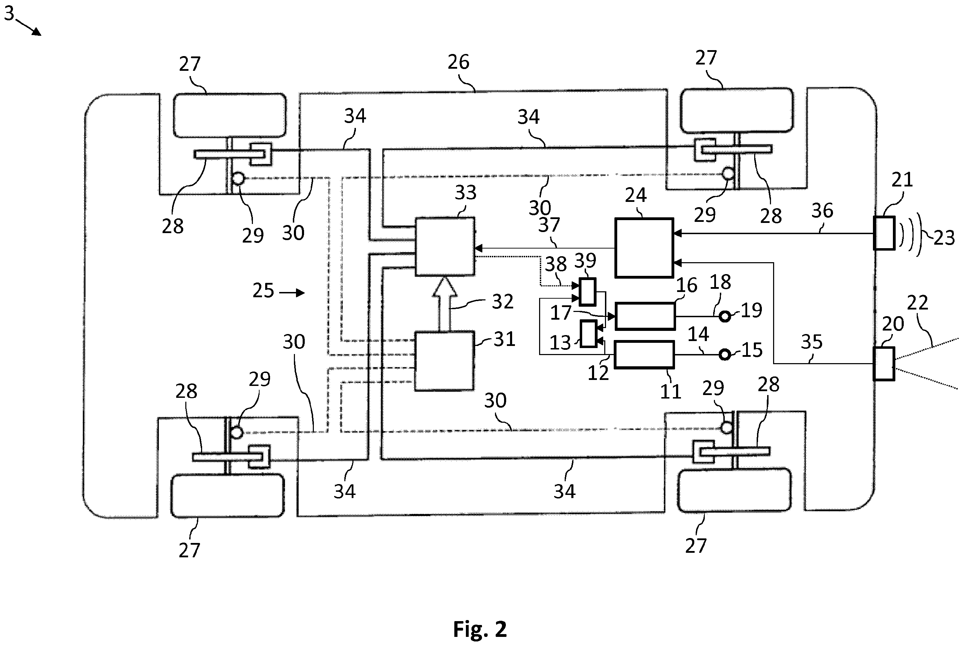

In den über das Car2X-Netzwerk 1 ausgetauschten Car2X-Nachrichten 17, können die einzelnen Knoten 3, 5, 8 untereinander verschiedene Informationen beschreibende Daten austauschen mit denen beispielsweise die Verkehrssicherheit auf der Straße 2 erhöht werden kann. Ein Beispiel für die Informationen, die mit den Daten in den Car2X-Nachrichten 17 ausgetauscht werden können, wäre die über den GNSS-Empfänger 11 bestimmte absolute geographische Lage 12 des jeweiligen Knotens 3, 5, 8 des Car2X-Netzwerkes 1. Derartige Daten können auch als Positionsdaten bezeichnet werden. Ist der die geographische Lage 12 empfangende Knoten 3, 5, 8 des Car2X-Netzwerkes 1 ein Fahrzeug, wie beispielsweise das nicht am Verkehrsunfall 10 beteiligte Fahrzeug 3 und das am Verkehrsunfall 10 beteiligte Fahrzeug 8 dann kann die über das Car2X-Netzwerk 1 empfangene geographische Lage 12 beispielsweise auf dem Navigationssystem 13 des empfangenden Fahrzeuges 3, 8 zur Darstellung beispielsweise der Verkehrsbewegung verwendet werden. Wird neben der absoluten geographischen Lage 12 auch der Verkehrsunfall 10 als Information mit den Daten in der Car2X-Nachricht 17 beschrieben, so können bestimmte Verkehrssituationen, wie beispielsweise der Verkehrsunfall 10 auf Navigationssystem 13 konkreter dargestellt werden. Auf weitere mögliche mit den Car2X-Nachrichten 17 austauschbare Informationen wird später im Rahmen der Fig. 2 näher eingegangen.

Zum Austausch der Car2X-Nachrichten 17 moduliert der Car2X-Transceiver 16 entweder eine Car2X-Nachricht 17 auf ein nachstehend Car2X-Signal 18 genanntes Übertragungssignal und versendet es über eine nachstehend Car2X-Antenne 19 genannte Antenne an die anderen Knoten 3, 5, 8 im Car2X-Netzwerk 1 oder er empfängt über die Car2X-Antenne 19 ein Car2X-Signal 18 und filtert aus diesem die entsprechende Car2X-Nachricht 17 heraus. Darauf wird an späterer Stelle im Rahmen der Fig. 3 näher eingegangen. In Fig. 1 ist dabei dargestellt, dass der Car2X-Transciever 16 eine Car2X-Nachricht 17 an das Navigationssystem 13 unter der Annahme ausgibt, dass diese in der oben beschriebenen Weise Informationen enthält, die auf diesem darstellbar sind. Das ist jedoch nicht einschränkend zu verstehen. Insbesondere kann zweckmäßigerweise auch der GNSS-Empfänger 11 direkt oder, wie in Fig. 2 gezeigt, indirekt mit dem Car2X-Transceiver 16 verbunden sein, um die eigene absolute geographische Lage 12 im Car2X-Netzwerk 1 zu versenden.

Die Struktur der Car2X-Nachricht 17 sowie des Car2X-Signals 18 und damit der Aufbau des Car2X-Netzwerkes können in einem Kommunikationsprotokoll definiert werden. Es gibt bereits derartige Kommunikationsprotokolle länderspezifisch unter anderem im Rahmen der ETSI TC ITS bei ETSI in Europa und im Rahmen der IEEE 1609 bei IEEE sowie bei SAE in den Vereinigten Staaten von Amerika. Weitere Informationen hierzu lassen sich in den genannten Spezifikationen finden.

Das Fahrzeug 3 kann optional noch die oben genannte Umfeldsensorik in Form einer Kamera 20 und eines Radarsensors 21 aufweisen. Mit der Kamera 20 kann das Fahrzeug 3 innerhalb eines Bildwinkels 22 ein Bild einer Ansicht aufnehmen, die in Fahrtrichtung 7 des Fahrzeuges 3 betrachtet vor dem Fahrzeug 3 liegt. Zudem kann das Fahrzeug 3 mit dem Radarsensor 21 und entsprechenden Radarstrahlen 23 in Fahrtrichtung 7 des Fahrzeuges 3 betrachtet Objekte erkennen und in einer an sich bekannten Weise den Abstand zum Fahrzeug 3 bestimmen.

Um die mit einer Car2X-Nachricht 17 übertragbaren Informationen zu konkretisieren, soll nachstehend zunächst auf den Aufbau des Fahrzeuges 3 und des weiteren Fahrzeuges 5 beispielhaft anhand des Fahrzeuges 3 eingegangen werden. Das Fahrzeug 3 besitzt verschiedene Sicherheitskomponenten von denen in Fig. 2 ein elektronischer Bremsassistent 24, EBA 24 genannt, und eine an sich bekannte Fahrdynamikregelung 25 gezeigt ist. Während der DE 10 2004 030 994 A1 Details zum EBA 24 entnommen werden können, können der DE 10 2011 080 789 A1 Details zur Fahrdynamikregelung 25 entnommen werden.

Das Fahrzeug 3 umfasst ein Chassis 26 und vier Räder 27. Jedes Rad 27 kann über eine ortsfest am Chassis 26 befestigte Bremse 28 gegenüber dem Chassis 26 verlangsamt werden, um eine Bewegung des Fahrzeuges 3 auf der Straße 2 zu verlangsamen.

Dabei kann es in einer dem Fachmann bekannten Weise passieren, dass das die Räder 27 des Fahrzeugs 3 ihre Bodenhaftung verlieren und sich das Fahrzeug 3 sogar von einer beispielsweise über ein nicht weiter gezeigtes Lenkrad vorgegebenen Trajektorie durch Untersteuern oder Übersteuern wegbewegt. Dies wird durch die Fahrdynamikregelung 25 vermieden.

In der vorliegenden Ausführung weist das Fahrzeug 4 dafür Drehzahlsensoren 29 an den Rädern 27 auf, die eine Drehzahl 30 der Räder 27 erfassen.

Basierend auf den erfassten Drehzahlen 30 kann ein Regler 31 in einer dem Fachmann bekannten Weise bestimmen, ob das Fahrzeug 3 auf der Fahrbahn rutscht oder sogar von der oben genannten vorgegebenen Trajektorie abweicht und entsprechend mit einem an sich bekannten Reglerausgangssignal 32 darauf reagieren. Das Reglerausgangssignal 32 kann dann von einer Stelleinrichtung 33 verwendet werden, um mittels Stellsignalen 34 Stellglieder, wie die Bremsen 28 anzusteuern, die auf das Rutschen und die Abweichung von der vorgegebenen Trajektorie in an sich bekannter Weise reagieren.

Der EBA 24 kann über die Kamera 20 erfasste Bilddaten 35 und über den Radarsensor 21 erfasste Abstandsdaten 36 zu Objekten wie Fahrzeugen in Fahrtrichtung 7 vor dem Fahrzeug 3 auswerten und basierend darauf eine Gefahrensituation erfassen. Diese könnte beispielsweise gegeben sein, wenn sich ein Objekt vor dem Fahrzeug 3 diesem mit einer zu hohen Geschwindigkeit nähert. In einem solchen Fall könnte der EBA 24 über ein Notbremssignal 37 die Stelleinrichtung 33 einweisen, über die Stellsignale 34 eine Notbremsung mit den Bremsen 28 auszuführen.

Jedes Mal, wenn der EBA 24 oder die Fahrdynamikregelung 25 über die Stelleinrichtung 33 in das Fahrzeug 4 eingreifen, kann beispielsweise die Stelleinrichtung 33 ein in Fig. 2 gepunktet dargestelltes Berichtssignal 38 ausgeben. Zweckmäßigerweise sollte das Berichtssignal 38 konkretisieren, ob der Eingriff durch den EBA 24 oder die Fahrdynamikregelung 25 bedingt war. Ein derartiges Berichtssignal 38 kann von einer beliebigen Instanz im Fahrzeug 3, also beispielsweise auch vom Regler 31 der Fahrdynamikregelung 25 erzeugt werden. Eine Nachrichtenerzeugungseinrichtung 39 könnte dann basierend auf dem Berichtssignal 38, der absoluten geographischen Lage 12 und einem in Fig.3 gezeigten aus einem Zeitgeber 40 ausgegebenen Zeitstempel 41 eine Car2X-Nachricht 17 erzeugen, mit der der Eingriff des EBAs 24 und/oder der Fahrdynamikregelung 25 als Information über das Car2X-Netzwerk 1 den anderen Knoten 5, 8 berichtet werden kann. Die so erzeugte Car2X-Nachricht 17 könnte dann über die Car2X-Antenne 19 im Car2X-Netzwerk 1 versendet werden.

In dem Beispiel der Fig. 1 wurde ausgeführt, dass die in den Car2X-Nachrichten 17 ausgetauschten Information über die absolute geographische Lage 12 der einzelnen Knoten 3, 5, 8 und/oder über Ereignisse wie der Verkehrsunfall 10 und/oder wie ein Eingriff des EBAs 24 und/oder der Fahrdynamikregelung 25 auf dem Navigationssystem 13 zur Orientierung des Fahrers dargestellt werden könnten. Alternativ oder zusätzlich können basierend auf den in den Car2X-Nachrichten 17 ausgetauschten Informationen aber auch aktiv Stellsignale 34 beispielsweise mit der Stelleinrichtung 33 generiert werden. Wird beispielsweise der Eingriff des EBA 24 als Information in einer Car2X-Nachricht 17 übermittelt, könnte beispielsweise basierend auf dem Empfang dieser Car2X-Nachricht 17 automatisch der EBA 24 in dem empfangenden Fahrzeug 3, 8 ausgelöst werden.

Nachstehend soll anhand der Fig. 3 die Übertragung einer Car2X-Nachricht 17 über das Car2X-Netzwerk 1 erläutert werden, das in Fig. 3 der Übersichtlichkeit halber mit einer Wolke angedeutet ist. Als Inhalt der Car2X-Nachricht 17 soll beispielsweise ein durch die Stelleinrichtung 33 mit dem Berichtssignal 38 berichteter Eingriff durch den EBA 24 in das am Verkehrsunfall 10 beteiligte Unfall-Fahrzeug 8 angenommen werden.

Wie bereits erläutert erzeugt die Nachrichtenerzeugungseinrichtung 39 basierend auf dem Berichtssignal 38, der absoluten geographischen Lage 12 und dem Zeitstempel 41 die Car2X-Nachricht 17 gemäß dem oben erwähnten Kommunikationsprotokoll. Die Nachrichtenerzeugungseinrichtung 39 kann dabei prinzipiell auch Teil des Car2X-Transceivers 16 sein.

Aus der Car2X-Nachricht 17 werden in dem Car2X-Transceiver 16 des Unfall-Fahrzeuges 8 in einer Datenpaketerzeugungseinrichtung 42 Datenpakete 43 erzeugt. Durch das Erzeugen von Datenpaketen 43 können Car2X-Nachrichten 17 aus verschiedenen Anwendungen in dem Unfall-Fahrzeug 8 zu einem einzigen Datenstrom zusammengefasst werden, um das Car2X-Signal 18 zu erzeugen. Die Datenpaketerzeugungseinrichtung 42 entspricht daher einer Netzwerk- und Transportschicht (eng. network and transport layer), deren Aufgabe es bekanntlich ist die Netzwerkdaten aus verschiedenen Anwendungen zu routen. Der Aufbau der Datenpaketerzeugungseinrichtung 42 ist von der oben genannten Spezifikation des Kommunikationsprotokolls für das Car2X-Netzwerk 1 abhängig.

Die generierten Datenpakete 43 werden in einer Modulationseinrichtung 44 auf das Car2X-Signal 18 aufmoduliert und im Car2X-Netzwerk 1 drahtlos versendet. Die Modulationseinrichtung 44 entspricht daher einer Schnittstellenschicht, deren Aufgabe es ist, das Unfall-Fahrzeug 8 physikalisch an das Car2X-Netzwerk 1 anzubinden. Auch der Aufbau der Modulationseinrichtung 44 ist von der oben genannten Spezifikation des Kommunikationsprotokolls für das Car2X-Netzwerk 1 abhängig.

Auf Seiten des nicht am Verkehrsunfall 10 beteiligten Fahrzeuges 3 kann das vom Unfall-Fahrzeug 8 versendete Car2X-Signal 18 dann über die Car2X-Antenne 19 empfangen werden.

Um die Car2X-Nachricht 17 aus dem Car2X-Signal 18 zu extrahieren weist der Car2X-Transceiver 16 des Fahrzeuges 3 eine Demodulationseinrichtung 45 auf, die die senderseitige Modulation der Datenpakete 43 in an sich bekannter Weise rückgängig macht. Entsprechend kann eine Nachrichtenextraktionseinrichtung 46 die Car2X-Nachrichten 17 aus den Datenpaketen 43 extrahieren und den Anwendungen im Fahrzeug 3, wie dem Navigationssystem 13 oder auch der Stelleinrichtung 33 zur Verfügung stellen. Letztendlich stellen die Demodulationseinrichtung 45 und die Nachrichtenextraktionseinrichtung 46 die empfangsseitigen Gegenstücke entsprechend der oben genannten Netzwerk und Transportschicht und der Schnittstellenschicht dar und sind ebenfalls von der oben genannten Spezifikation des Kommunikationsprotokolls für das Car2X-Netzwerk 1 abhängig.

Zu Details der einzelnen Netzwerkschichten wird daher auf die einschlägigen Spezifikationen verwiesen.

Insbesondere in Hochlastsituationen, wenn sich auf der Straße 2 eine Vielzahl von Knoten 3, 5, 8 im Car2X-Netzwerk 1 befinden, müssen in den jeweiligen Knoten 3, 5, 8 zur Verarbeitung aller im Car2X-Netzwerk 1 versendeten Car2X-Nachrichten 17 entsprechend hohe Rechenressourcen freigehalten werden, um empfängerseitig die Verarbeitung aller Car2X-Nachrichten 17 innerhalb bestimmter Zeitschranken zu garantieren. Die Bereitstellung dieser hohen Rechenressourcen ist mit einem entsprechend hohen Kostenaufwand verbunden, der im Rahmen der vorliegenden Ausführung durch die Einführung von Vorfiltern 47, 48 reduziert werden soll.

Die Idee hinter den Vorfiltern 47, 48 ist, potentiell irrelevante Car2X-Nachrichten 17 möglichst frühzeitig auszusortieren, um zu vermeiden, dass diese durch ein Element in der Empfangskette unnötigerweise verarbeitet werden müssen, weil sie ohnehin für den Empfangsknoten irrelevante Informationen enthalten. Während der erste Vorfilter 47 dabei das Car2X-Signal 18 ohne Kenntnis der eigentlichen Car2X-Nachricht 17 filtern soll, soll der zweite Vorfilter 48 die Datenpakete 43 ohne Kenntnis der eigentlichen Car2X-Nachricht 17 filtern. Zwar wird dadurch nicht mehr sichergestellt, dass von den im Fahrzeug-Ad-Hoc-Netzwerk 1 versendeten Car2X-Nachrichten 17 auch alle sicherheitskritischen Car2X-Nachrichten 17, wie beispielsweise eine Meldung über einen Eingriff des EBA 24 auch tatsächlich am Fahrzeug 3 ankommen. In der Regel aber werden derart sicherheitskritische Car2X-Nachrichten 17 nicht nur einmal versendet, so dass im statistischen Mittel davon auszugehen ist, dass derart sicherheitskritische Car2X-Nachrichten 17 in einem vertretbaren Zeitrahmen die Vorfilter 47, 48 passieren. Um diesen vertretbaren Zeitrahmen zu klein wie möglich zu halten, können Vorfilter 47, 48 so ausgelegt werden, dass sicherheitskritische Daten mit überdurchschnittlicher Wahrscheinlichkeit die Vorfilter 47, 48 passieren.

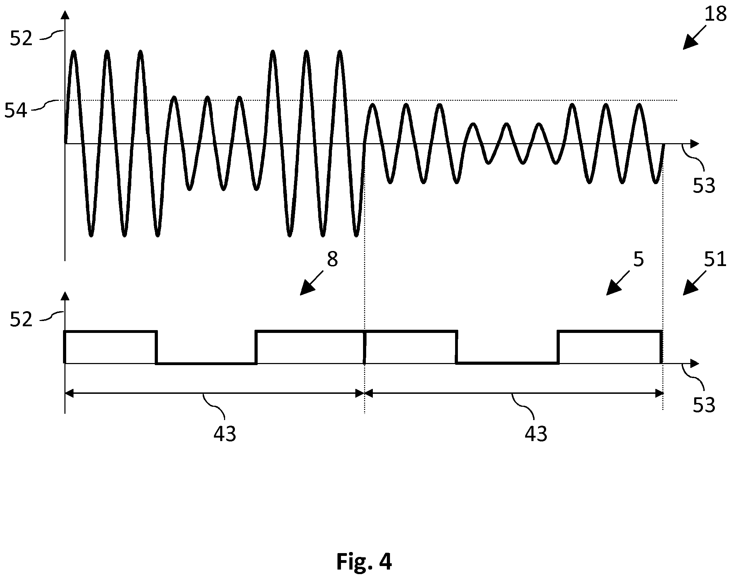

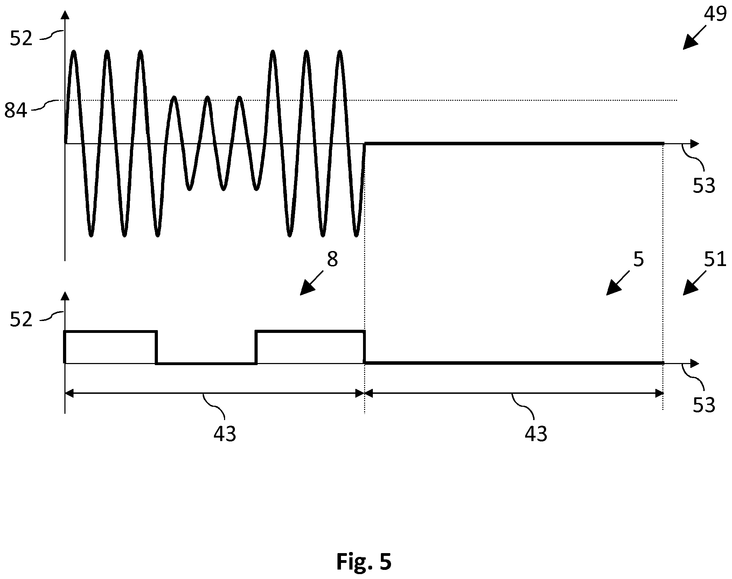

Für eine möglichst effiziente Vorfilterung in den Vorfiltern 47, 48 wird eine vorbestimmte Bedingung eingeführt, nach der das Car2X-Signal 18 im ersten Vorfilter 47 und/oder die Datenpakete 43 im zweiten Vorfilter 48 vorgefiltert werden. Diese vorbestimmte Bedingung wird nachstehend anhand von Fig. 4 und 5 erläutert, die ein Beispiel für das Car2X-Signal 18 und ein die zum Car2X-Signal 18 gehörenden Datenpakete 43 tragendes Signal 51 in je einem Signalstärke 52 - Zeit 53 - Diagramm zeigen.

Das Car2X-Signal 18 kann ein beliebiges Trägersignal sein, auf das die Datenpakete 43 in beliebiger Weise aufmoduliert sind. Da das Car2X-Signal 18 die Datenpakete 43 aller am Car2X-Netzwerk 1 beteiligten Knoten 3, 5, 8 überträgt, sind neben den Datenpaketen 43 des Unfall-Fahrzeugs 8 auch Datenpakete 43 von Knoten 3, 5, 8 vorhanden, die von dem Fahrzeug 3 weiter entfernt sind, wie beispielsweise eine der beiden Ampeln 5. Wie aus Fig. 4 zu sehen, lässt sich ein derartiger, weiter entfernter Knoten 5 dadurch erkennen, dass seine Datenpakete 43 mit einer Signalstärke 52 übertragen werden, die deutlich kleiner ist, als die Signalstärke 52 der Datenpakete 43 des Unfall-Fahrzeuges 8. An dieser Stelle kann mit der Vorfilterung angegriffen werden und aus dem Car2X-Signal 18 nur die Datenpakete 43 herausfiltern, deren Signalstärke 52 eine gewisse Mindestsignalstärke 54 überschreitet. Hierzu kann das erste Vorfilter 47 beispielsweise das Car2X-Signal 18 derart vorfiltern, dass sich das vorgefilterte Car2X-Signal 49 und so die Datenpakete 43 des entsprechenden Knotens 8 herausgefiltert werden.

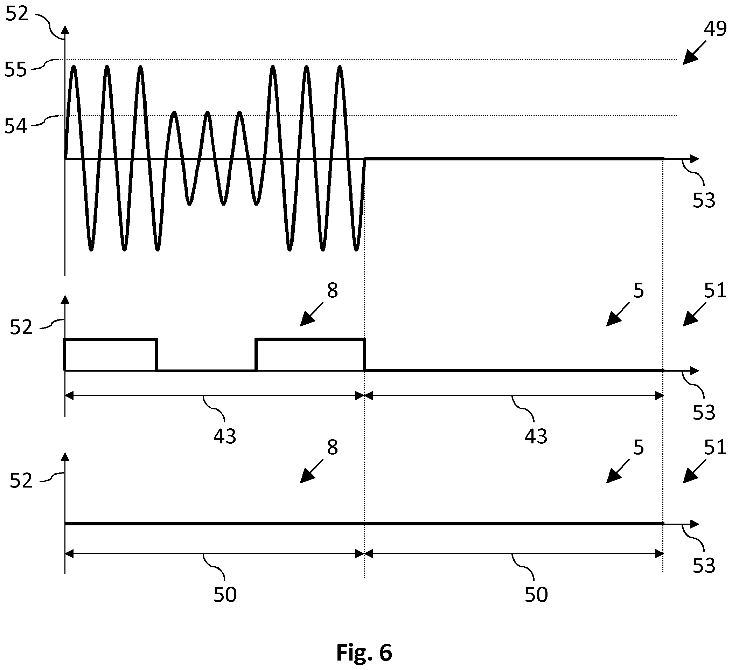

Im zweiten Vorfilter 48 könnten dann die aus dem vorgefilterten Car2X-Signal 49 noch einmal, wie in Fig. 6 gezeigt, basierend auf einer weiteren Mindestsignalstärke 55 nachgefiltert werden, wobei dieser dann die Signalstärke 52 des Car2X-Signals 18 zu jedem Datenpaket 43 kennen müsste. Dabei könnte die Mindestsignalstärke 54 der Fig. 4 und 5 so gewählt werden, dass die Anzahl der sich aus dem gefilterten Car2X-Signals 49 ergebenden Datenpakete 43 immer noch höher als die verfügbare Rechenleistung ist. Erst mit der weiteren Mindestsignalstärke 55 im zweiten Vorfilter 48 könnte die Anzahl der so gefilterten Datenpakete 50 so reduziert werden, dass die notwendige Rechenleistung an die verfügbare Rechenleistung angepasst wird. Hierbei könnten dann auch die Datenpakete 43 des Unfall-Fahrzeuges 8 herausgefiltert werden, wenn dies beispielsweise vom Fahrzeug 3 noch zu weit weg ist. Zweckmäßigerweise sollte die Mindestsignalstärke 54 kleiner gewählt werden, als die weitere Mindestsignalstärke 55, da sonst der zweite Vorfilter 48 wirkungslos wäre.

Das Filtern des Car2X-Signals 18 und/oder der Datenpakete 43 basierend auf den Mindestsignalstärken 54, 55 hat den Effekt, dass Knoten 5, 8 in Car2X-Netzwerk 1 die zu weit entfernt sind, um sicherheitskritisch für das Fahrzeug 3 zu sein, bei einer zu hohen Rechenlast zur Verarbeitung aller im Car2X-Signals 18 ankommenden Datenpakete 43 für die zuvor genannte Datenverarbeitungseinrichtung unbeachtet bleiben, weil es in diesem Fall mit Sicherheit näher am Fahrzeug 3 liegende Knoten 5, 8 im Car2X-Netzwerk 1 und/oder Ereignisse 10 gibt, die aus Gesichtspunkten der Verkehrssicherheit wichtiger sind, da sonst die hohe Rechenlast nicht auftreten würde. Anschaulich gesagt, wird mit den Mindestsignalstärken 54, 55 versucht, im Falle der zu hohen Rechenlast um das Fahrzeug 3 herum Empfangsradien zu legen, außerhalb derer die Datenpakete 43 die Knoten 5, 8 des Car2X-Netzwerkes 1 ignoriert werden. Es kommt dann nicht mehr darauf an, was diese Knoten 5, 8 inhaltlich tatsächlich gesendet haben.

Die Mindestsignalstärken 54, 55 und damit die Empfangsradien sind jedoch nicht statisch gelegt, weil dann im Falle ausreichender Signalverarbeitungsressourcen zur Verarbeitung Datenpakete 43 in dem Car2X-Signal 18 unnötigerweise Datenpakete 43 ignoriert oder aussortiert werden.

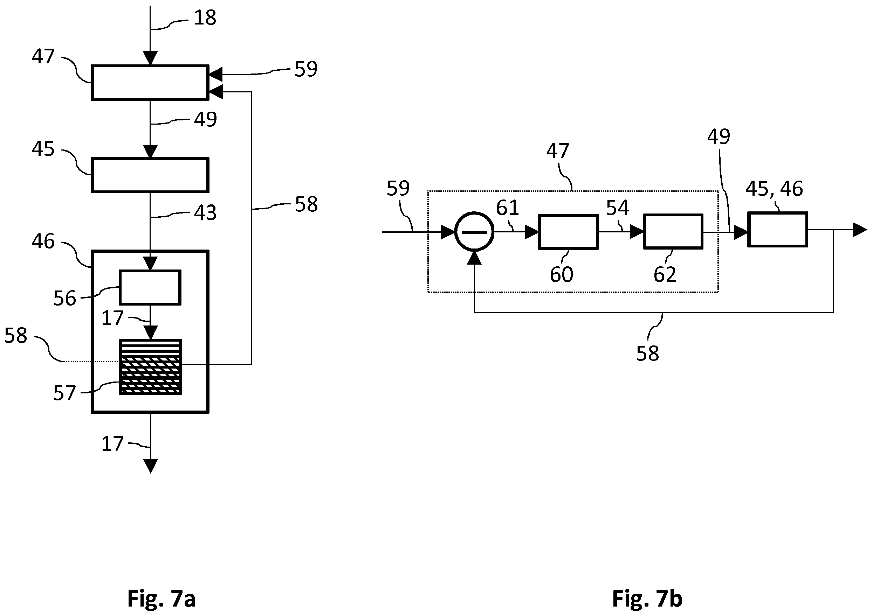

Daher werden die Mindestsignalstärken 54, 55 variabel gewählt , was beispielsweise im ersten Vorfilter 47 basierend auf einer Regelung erfolgen könnte, die in Fig. 7a und 7b gezeigt ist. Hierzu soll rein der Übersichtlichkeit halber und ohne Einschränkung der Erfindung auf das zweite Vorfilter 48 verzichtet werden. In der Praxis kann das zweite Vorfilter 48 selbstverständlich vorhanden sein.

Wenn aus Den Datenpaketen 43 des gefilterten Car2X-Signals 49 in der Nachrichtenextraktionseinrichtung 46 über eine entsprechende Signalverarbeitungseinrichtung 56 die Car2X-Nachrichten 17 extrahiert sind, können diese in einer Warteschlange 57 hinterlegt werden, wenn diese nicht sofort durch die übergeordneten Signalverarbeitungseinrichtungen, wie beispielsweise das Navigationssystem 13 und/oder die Stelleinrichtung 33 verarbeitet werden können. Als Indikator ob die gesamte Rechenleistung ausreicht oder nicht, kann hier der Ist-Füllgrad 58 der Warteschlage 57 herangezogen werden. Überschreitet der Ist-Füllgrad 58 einen bestimmten Soll-Füllgrad 59, ab dem die Rechenleistung des Gesamtsystems nicht mehr ausreicht, um alle Datenpakete 43 zu verarbeiten, kann die Mindestsignalstärke 54 im ersten Vorfilter 47 von einem Regler 60 basierend auf einer Regeldifferenz 61 zwischen dem Soll-Füllgrad 59 und dem Ist-Füllgrad 58 entsprechend heraufgesetzt werden, um die Anzahl der Datenpakete 71, die an der Nachrichtenextraktionseinrichtung 46 ankommt, mit einem entsprechenden von der Mindestsignalstärke 54 abhängigen Filterelement 62 gemäß Fig. 4 und 5 zu verringern.

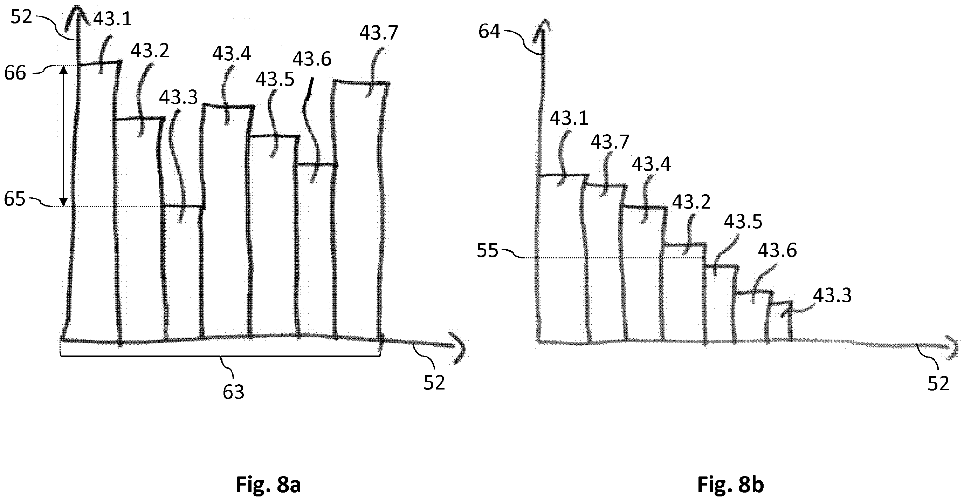

Alternativ oder zusätzlich zu dem ersten Vorfilter 47 kann nun das zweite Vorfilter 48 gemäß Fig. 8a und 8b filtern: Zunächst kann für eine Anzahl von Datenpaketen, die in Fig. 8a und 8b mit den Bezugszeichen 43.1 bis 43.7 versehen wurde in einem Betrachtungszeitraum 63 normiert werden. Hierzu kann die Signalstärke 52 jedes Datenpaketes 43.1 bis 43.7 gemäß einer beliebigen Normierungvorschrift, wie beispielsweise:

$$A_{norm}(A) = (A - A_{min}) / (A_{max} - A_{min}).$$

Dabei stellen A die Signalstärke 52, $A_{norm}$ die normierte Signalstärke 64, $A_{min}$ die minimale Signalstärke 65 im Betrachtungszeitraum 63 und $A_{max}$ die maximale Signalstärke 66 im Betrachtungszeitraum 63 dar. Eine alternative Normierungsvorschrift wäre beispielsweise

$$A_{norm}(A) = A / (A_{max} - A_{min}).$$

Die so in ihrer Signalstärke 52 normierten Datenpakete 43.1 bis 43.7 können dann gemäß Fig. 8b sortiert beziehungsweise bei Unterschreiten der weiteren Minimalsignalstärke 65 für das zweite Vorfilter 48 aussortiert werden.

Mit der Normierung kann sichergestellt werden, dass Datenpakete 43 in verschiedenen Empfangsszenarien, beispielsweise in der Stadt oder auf offenem Gelände standardisiert behandelt werden.

Die Vorfilter 47, 48 können um weitere, nicht gezeigte Vorfilter erweitert werden. Eine Möglichkeit wäre, am Fahrzeug 3 Empfangssektoren zu definieren und die Car2X-Antenne 19 gerichtet auszuführen. Dann könne in jeden dieser definierten Empfangssektoren eine Car2X-Antenne 19 gerichtet werden, wodurch die Empfangsrichtung des Car2X-Signals 18 und/oder der Datenpakete 43 ermittelt werden könnte. Dabei muss nicht zwangsläufig für jede gerichtete Car2X-Antenne 19 ein eigener Transceiver 16 bereitgestellt sein. Beispielsweise könnten die Empfangssektoren ausgehend von der Fahrtrichtung 7 des Fahrzeuges 3 gesehen vor dem Fahrzeug 3, hinter dem Fahrzeug 3, links vom Fahrzeug 3 und rechts vom Fahrzeug 3 definiert werden. Basierend auf der Bewertung der Datenpakete 43 in Abhängigkeit dieser Empfangssektoren können Situationen wie Kreuzungen auf der Straße 2 besser bewertet werden. Es ist in der Regel davon auszugehen, dass Car2X-Signale 18, die gesehen in Fahrtrichtung 7 von vorn oder von hinten zum Fahrzeug 3 empfangen werden, höhere Signalpegel 52 haben als Car2X-Signale 18, die von links oder von rechts zum Fahrzeug 3 empfangen werden. Dies könnte dann bei der Bestimmung des normierten Signalpegels 64 berücksichtigt werden, denn gefährlich sind häufig Datenpakete 43 übertragende Car2X-Signale 18 die aus den Empfangssektoren links und rechts vom Fahrzeug 3, z.B. kurz vor einer Kollision an einer Kreuzung auf der Straße 2 kommen. Bei der Normierung des Signalpegels 52 zum normierten Signalpegel 64 kann beispielsweise auch das wahrscheinliche Fahrmanöver des Fahrzeugs 3 berücksichtigt werden, denn biegt das Fahrzeug z.B. nach links ab, so sind Car2X-Signal 18 von links kommend wichtiger als bei einer Rückwärtsfahrt des Fahrzeuges 3. Alternativ könnten die Empfangssektoren aber auch statt im Rahmen der Normierung im Rahmen einer Gewichtung berücksichtigt werden.

Bei der Bewertung der empfangenen Datenpakete 43 in Abhängigkeit von der Empfangsrichtung könnte in die Normierung oder Gewichtung des Signalpegels 52 die Richtcharakteristik der entsprechenden Car2X-Antenne 19 für die jeweilige Empfangsrichtung ebenfalls mit berücksichtigt werden. Diese Richtcharakteristik könnte beispielsweise vermessen werden und wird in den meisten Fällen zur Bestimmung der Empfangsrichtung ohnehin bereits benötigt. Somit können Unterschiede im Signalpegel 52 mehrerer empfangener Datenpakete 43, die sich alleine aus der Richtcharakteristik der Car2X-Antennen 19 ergeben, für die weitere Verarbeitung bzw. Bewertung herausgerechnet werden.

Zudem könnte auch in Situationen, in denen die Anzahl der eigentlich zu verarbeitenden Datenpakete 43 die zur Verfügung stehende Rechenkapazität übersteigt, die Anzahl zu verarbeitender Datenpakete 43 von ein und demselben Sender, also beispielsweise des Unfall-Fahrzeuges 8, reduziert werden, indem gleichartige Datenpakete 43, die beispielsweise auf den Unfall 10 hinweisen gezielt ausgelassen und damit verworfen werden.

Die Filterungen sollten so früh wie möglich in der Verarbeitungskette für empfangene Datenpakete eingesetzt werden, also z.B. direkt nach dem physikalischen Empfang des Car2X-Signals 18 und noch vor der eigentlichen Bearbeitung der darin enthaltenen Datenpakete 43.

Im Stand der Technik sind bereits Fahrzeug-zu-X-Kommunikationssysteme bekannt, die sowohl zur Übertragung verkehrsbezogener Daten als auch verschiedener Service-Daten, wie etwa Unterhaltungsanwendungen, ausgebildet sind. Die Fahrzeug-zu-X-Kommunikation basiert dabei sowohl auf dem Datenaustausch zwischen Fahrzeugen untereinander (Fahrzeug-zu-Fahrzeug-Kommunikation) als auch auf dem Datenaustausch zwischen Fahrzeugen und Infrastruktureinrichtungen (Fahrzeug-zu-Infrastruktur-Kommunikation). Aufgrund der hohen Anforderungen an die Zuverlässigkeit und Datensicherheit von mittels Fahrzeug-zu-X-Kommunikation übertragenen Informationen, werden derartige Informationen notwendigerweise mit einer aufwändigen Sicherheitssignatur bzw. Datenverschlüsselung versehen.

Die Auswertung einer derartigen Sicherheitssignatur bzw. die Decodierung einer derartigen Datenverschlüsselung sind jedoch mit verhältnismäßig hohem Rechenaufwand verbunden. Um den Rechenaufwand und damit die Beschaffungskosten für ein ausreichend rechenstarkes Rechenmodul möglichst gering zu halten, sind im Stand der Technik weiterhin unterschiedliche Vorverarbeitungsverfahren bekannt, die unter allen empfangenen Fahrzeug-zu-X-Botschaften eine Auswahl der zu decodierenden Fahrzeug-zu-X-Botschaften treffen. Oftmals basieren derartige Vorverarbeitungsverfahren auf dem Abstand des Empfängers zum Sender der Fahrzeug-zu-X-Botschaft, indem aus dem Abstand eine Bedeutsamkeit der Fahrzeug-zu-X-Botschaft für den Empfänger abgeleitet wird.

Bei der Fahrzeug-zu-X-Kommunikation müssen daher je nach Situation, insbesondere abhängig von der Zahl der Kommunikationsteilnehmer, sehr unterschiedliche Mengen an Daten verarbeitet werden. Dies führt dazu, dass eine Hardware vorgehalten werden muss, die für den Extremfall, d.h. für die größte zu erwartende Rechenanforderung, ausgelegt sein muss, jedoch meistens diese Rechenleistung nicht benötigt. Dieser Extremfall wird dabei durch die maximal mögliche Kanallast definiert, d.h., durch diejenige Datenmenge, die über die zur Verfügung stehenden Kommunikationskanäle maximal übertragen werden kann. Bei der Ermittlung der benötigten Rechenleistung kommt allerdings erschwerend hinzu, dass unterschiedliche Daten bei gleicher Menge unterschiedlich aufwändige Verarbeitungsschritte erfordern, z.B. Paketweiterleitungen oder vollständige Decodierungen.

Bei der Fahrzeug-zu-X-Kommunikation besteht allgemein der Ansatz, ein weitestgehend vollständig deterministisches System aufzubauen, bei dem jedes von einem Empfänger empfangene Paket auch sicher zu der gewünschten Reaktion auf diese Art von Paketen führt. Datenverluste werden nur auf der physikalischen Ebene der Kommunikation toleriert. Das führt zu sehr hohen Rechenaufwänden, weil sämtliche Daten bis zur finalen Anwendung auf allen Ebenen des Kommunikationsstacks bearbeitet werden. Der Begriff "Paket" beschreibt im Sinne der Erfindung ein Datenpaket, das von einer sogenannten Fahrzeug-zu-X-Botschaft umfasst ist. Die Fahrzeug-zu-X-Botschaft wiederum wird von einem sendenden Kommunikationsteilnehmer zu einem empfangenden Kommunikationsteilnehmer übertragen.

Die Aufgabe eines weiteren Aspekts der Erfindung ist es, den Rechenaufwand und insbesondere den Dekodierrechenaufwand eines Fahrzeug-zu-X-Kommunikationssystems zu vermindern. Somit kann auch die kostenintensive Rechenhardware Fahrzeug-zu-X-Kommunikationssystems einfacher und kostengünstiger ausgelegt werden.

Das erfindungsgemäße Verfahren sieht es nun vor, die vollständige Verarbeitung der empfangenen Pakete zugunsten eines reduzierten Rechenaufwands aufzugeben. Als Kriterium für die Auswahl der zu bearbeitenden Pakete und der nicht zu bearbeitenden bzw. zu verwerfenden Pakete wird die Empfangsfeldstärke herangezogen.

Ein fester Schwellwert der Empfangsfeldstärke stellt jedoch oftmals keine zufriedenstellende Lösung dar, da die Empfängerhardware typischerweise in der Langzeitbetrachtung hinsichtlich der Zahl der zu bearbeitenden Pakete und der zu verwerfenden Pakete keine verlässliche Reproduzierbarkeit aufweist. Darüber hinaus würde ein fester Schwellwert in Situationen mit geringer Kanallast unnötig viele Pakete ausfiltern.

Um dennoch in möglichst allen Situationen mit der Empfangsfeldstärke als Filter arbeiten zu können, sind erfindungsgemäß die folgenden Ausführungsformen besonders bevorzugt:

1. Steigt die Anzahl der empfangenen Pakete pro Zeiteinheit über einen bestimmten Wert, so wird die Empfangsempfindlichkeit der Kommunikationshardware reduziert, ggf. bis zu einem in einem Fahrzeug-zu-X-Kommunikationsstandard geforderten Minimalwert. Im umgekehrten Fall, falls also mehr Pakete verarbeitet werden können als aktuell empfangen werden, wird die Empfangsempfindlichkeit der Kommunikationshardware erhöht. Dieses Vorgehen kann vorteilhafterweise auch als Regelung ausgelegt werden, wobei jedoch eine gewisse Trägheit der Kommunikationshardware in Bezug auf die Einstellung der Empfangsempfindlichkeit bei der Regelung berücksichtigt werden muss.

2. Anstatt die Empfangsempfindlichkeit der Kommunikationshardware zu regeln bzw. zu steuern, kann auch mittels Software nach dem Signalpegel bzw. nach der Empfangsfeldstärke gefiltert werden. Hierbei bietet es sich an, zuerst statistische Größen, wie Maximalwert, Minimalwert, Median und/oder Mittelwert des Signalpegels über einen Zeitbereich T1 zu ermitteln. Anschließend werden über einen Zeitbereich T2 (der bevorzugt kleiner ist als T1) die Pakete nach dem Signalpegel sortiert bzw. bei Unterschreiten einer Schwelle verworfen. Dabei kann der Signalpegel auch normiert werden, beispielsweise auf (Signalpegel-Minimalwert)/(Maximalwert-Minimalwert) oder Signalpegel/Mittelwert oder Signalpegel/Median oder es kann eine Einteilung in Perzentile erfolgen. Grundsätzlich gilt dabei, dass größere Signalpegel bedeuten, dass der Sender näher am Empfänger ist und damit relevanter für das empfangende Fahrzeug bzw. den empfangenden Kommunikationsteinehmer. Über die Normierung kann sichergestellt werden, dass die Empfangssituation berücksichtigt wird, also auf offenem Gelände andere Pakete verworfen werden als z.B. in der Innenstadt.

3. Beide Verfahren (Hardware und Software) zur Regelung bzw. Steuerung der Empfangsempfindlichkeit bzw. zur Filterung des Signalpegels bzw. der Empfangsfeldstärke können auch kombiniert werden. Dabei wird aufgrund der Trägheit der Kommunikationshardware in Bezug auf die Einstellung der Empfangsempfindlichkeit bevorzugt eine erste Filterung mittels Hardware durchgeführt und eine zweite, vergleichsweise feinere Filterung ("Feinfilterung") in Software durchgeführt. Das bedeutet also, dass die Empfangsfeldstärke derart eingestellt wird, dass im Zweifelsfall eher zu viele als zu wenige Pakete empfangen werden. Mittels der Software wird die Anzahl der Pakete, die weiter verarbeitet werden, dann auf die gewünschte Anzahl reduziert.

Die beschriebenen Verfahren werden bevorzugt auch getrennt nach Empfangssektoren, d.h., nach Empfangsrichtung der Pakete ausgeführt. Besonders geeignet sind hierfür Empfangsmodule mit mehreren Antennen und z.B. Diversity. Die Empfangssektoren entsprechen bevorzugt den Richtungen "vorne", "hinten", "links", "rechts". Über die getrennte Bewertung der Pakete nach Empfangssektoren können Situationen wie Kreuzungen besser bewertet werden. Es ist in der Regel davon auszugehen, dass Signale von vorne und hinten höhere Signalpegel haben als Signale von links oder rechts. Gefährlich sind jedoch häufig Signale von den Seiten, z.B. kurz vor einer Kollision an einer Kreuzung. Durch die Verarbeitung in Sektoren kann vorteilhafterweise auch eine Gewichtung stattfinden, je nach wahrscheinlichem Fahrmanöver des Fahrzeugs. Biegt das Fahrzeug z.B. nach links ab, so sind Signale von links wichtiger als bei einer Rückwärtsfahrt.

Ein weiteres Beispiel zur Bewertung der Pakete in Abhängigkeit von der Empfangsrichtung ist die Gewichtung des Signalpegels entsprechend der aus einer entsprechenden Vermessung bekannten Richtcharakteristik der Antennen. Diese Vermessung wird in den meisten Fällen zur Bestimmung der Empfangsrichtung ohnehin bereits benötigt. Somit können Unterschiede im Signalpegel mehrerer empfangener Pakete, die sich alleine aus der Richtcharakteristik der Antennen ergeben, für die weitere Verarbeitung bzw. Bewertung herausgerechnet werden. Das beschriebene Verfahren kann also mit hoher Wahrscheinlichkeit sicherstellen, dass alle wichtigen Pakete in der Regel empfangen werden. Dies wird insbesondere auch dadurch begünstigt, dass wichtige Pakete allgemein häufiger versendet werden als vergleichsweise unwichtige Pakete. Auch durch die sich ändernden Randbedingungen zwischen zwei Paket-Sendevrogängen desselben Senders ist statistisch davon auszugehen, dass die Pakete früh genug den Vorfilter des Empfängers passieren und damit eine rechtzeitige Reaktion sichergestellt werden kann.

Gemäß einem weiteren Beispiel ist es vorgesehen, dass in einer sogenannten Überlastsituation, also einer Situation, in der die Anzahl der eigentlich zu verarbeitenden Pakete die zur Verfügung stehende Rechenkapazität übersteigt, die Anzahl zu verarbeitender Pakete von ein und demselben Sender reduziert wird, indem gleichartige Pakete gezielt ausgelassen und damit verworfen werden.

Bevorzugt wird das erfindungsgemäße Verfahren so früh wie möglich in der Verarbeitungskette für empfangene Pakete eingesetzt, also z.B. direkt nach dem physikalischen Empfang der Pakete und noch vor der eigentlichen Bearbeitung der Pakete.

Weitere bevorzugte Ausführungsformen ergeben sich aus den Unteransprüchen und der nachfolgenden Beschreibung eines Ausführungsbeispiels an Hand von Figuren.

Es zeigt

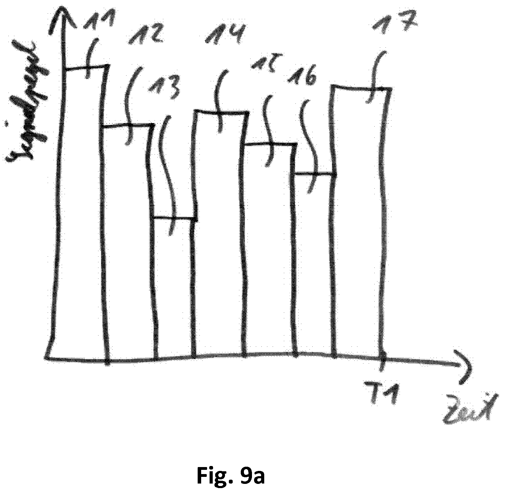

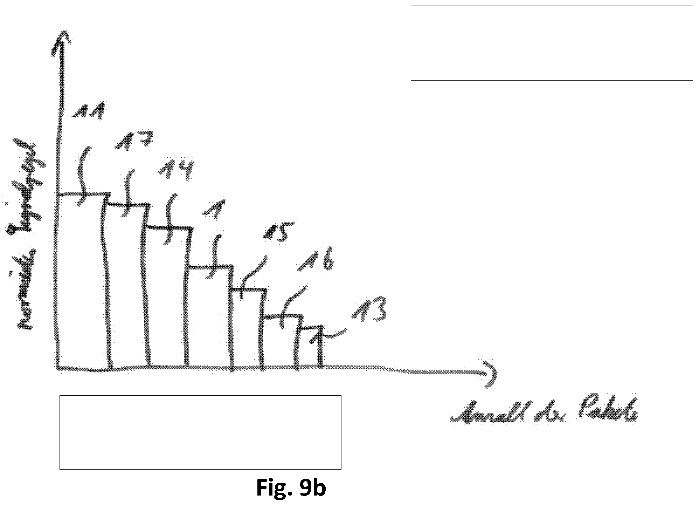

Fig. 9 Signalpegel einer Anzahl von empfangenen Paketen. Die Bezugszeichen der Fig. 9 beschreiben andere technische Elemente als die Bezugszeichen der Fig. 1 bis 8.

Fig. 9a zeigt die Signalpegel (y-Achse) einer Anzahl von empfangenen Paketen 11, 12, 13, 14, 15, 16 und 17, die im Zeitraum T1 (x-Achse) empfangen wurden. Die Signalpegel von Paketen 11, 12, 13, 14, 15, 16 und 17 liegen dabei über einer eingestellten und veränderbaren Empfindlichkeitsschwelle der verwendeten Empfangshardware des Fahrzeug-zu-X-KOmmunikationssystems. Die die Anzahl von Paketen 11, 12, 13, 14, 15, 16 und 17 immer noch derart groß ist, dass eine Decodierung bzw. Auswertung in angemessener Zeit nicht möglich wäre, werden empfangene Pakete 11, 12, 13, 14, 15, 16 und 17 in Fig. 9b auf den Mittelwert des Signalpegels normiert und anschließend nach ihrem Signalpegel sortiert. Die derart sortierten und normierten Signalpegel sind in Fig. 9b zu sehen. Die Signalpegel von Paketen 11, 17, 14 und 15 liegen oberhalb von Schwellwert 18, während die Signalpegel von Paketen 16 und 13 unterhalb von Schwellwert 18 liegen. Pakete 16 und 13 werden daher verworfen. Somit wurde die Anzahl der zu verarbeitenden Pakete auf ein handhabbares und der zur Verfügung stehenden Rechenleistung entsprechendes Maß reduziert.

**Patentansprüche**

1. Verfahren zum Filtern eines in einem Fahrzeug-Ad-hoc-Netzwerk (1) übertragenen Übertragungssignals (18), das wenigstens Positionsdaten (12) zu Teilnehmern (3, 5, 8) in Datenpaketen (43) trägt, umfassend:

   - Empfangen (19) des Übertragungssignals (18),
   - Filtern (45, 47, 48) der Datenpakete (43) aus dem Übertragungssignal (18) basierend auf einem Empfangsfilter (45) mit einer vorbestimmten Empfangsfiltervorschrift zum Demodulieren der Datenpakete (45) aus dem Übertragungssignal (18) und einer zusätzlichen vorbestimmten Bedingung (54, 55), und
   - Ausgeben der gefilterten Datenpakete (50) an eine dem Empfangsfilter (45) übergeordnete Datenverarbeitungseinrichtung (13, 46) wobei die vorbestimmte Bedingung (54, 55) eine Mindestsignalstärke (54, 55) umfasst, die das Übertragungssignal (18) an der Stelle des zu demodulierenden Datenpaketes (43) besitzen muss , **dadurch**

   **gekennzeichnet, dass** die Mindestsignalstärke (54, 55) von einer Verarbeitungslast (59) des Empfangsfilters (45) und/oder einer Verarbeitungslast (59) der Datenverarbeitungseinrichtung (13, 46) abhängig ist.

2. Verfahren nach Anspruch 1, wobei die Mindestsignalstärke (54, 55) von wenigstens einem Normwert für das Übertragungssignal (18) in einem vorbestimmten Zeitfenster (63) abhängig ist.

3. Verfahren nach Anspruch 1 oder 2, wobei die Mindestsignalstärke (54, 55) derart gewählt wird, dass in dem vorbestimmten Zeitfenster (63) eine Anzahl (55) an Datenpaketen (43) aus dem Übertragungssignal (18) ausgewählt werden, die vom Übertragungssignal (18) in dem Zeitfenster (63) mit den höchsten Signalstärken (52) übertragen werden.

4. Verfahren nach Anspruch 2 oder 3, wobei die Datenpakete (43) zunächst basierend auf der von der Verarbeitungslast (59) abhängigen Mindestsignalstärke (54) und danach basierend auf einer weiteren auf den Normwert bezogenen Mindestsignalstärke (55) gefiltert werden.

5. Verfahren nach Anspruch 4, wobei die weitere Mindestsignalstärke (55) größer ist, als die Mindestsignalstärke (54).

6. Verfahren nach einem der vorstehenden Ansprüche , wobei die Mindestsignalstärke (54, 55) in ihrem Wert ein absolutes Maximum besitzt.

7. Empfänger (16) für ein Fahrzeug (3) zum Empfangen von in Datenpaketen (43) verpackten Nachrichten (17) mit einem Übertragungssignal (18) in einem Fahrzeug-Ad-Hoc-Netzwerkes (1), umfassend:

   - eine Antenne (19) zum Empfangen des Übertragungssignals (18),
   - eine Filtervorrichtung (45, 47, 48) ausgeführt zur Durchführung eines Verfahrens nach einem der vorstehenden Ansprüche zum Filtern wenigstens eines Teils der Datenpakete (43) aus dem Übertragungssignals (18), und
   - eine Darstellungsvorrichtung (46) ausgeführt zum Extrahieren der Nachrichten (17) aus den gefilterten Datenpaketen (50).

**Claims**

1.  Method for filtering a transmission signal (18) which is transmitted in a vehicle ad hoc network (1) and carries at least position data (12) relating to subscribers (3, 5, 8) in data packets (43), comprising:

    - receiving (19) the transmission signal (18),
    - filtering (45, 47, 48) the data packets (43) from the transmission signal (18) on the basis of a receive filter (45) having a predetermined receive filter rule for demodulating the data packets (45) from the transmission signal (18) and an additional predetermined condition (54, 55), and
    - outputting the filtered data packets (50) to a data processing device (13, 46) which is superordinate to the receive filter (45), wherein the predetermined condition (54, 55) comprises a minimum signal strength (54, 55) which the transmission signal (18) must have at the location of the data packet (43) to be demodulated, **characterized in that** the minimum signal strength (54, 55) is dependent on a processing load (59) of the receive filter (45) and/or a processing load (59) of the data processing device (13, 46).

2.  Method according to Claim 1, wherein the minimum signal strength (54, 55) is dependent on at least one standard value for the transmission signal (18) in a predetermined time window (63).

3.  Method according to Claim 1 or 2, wherein the minimum signal strength (54, 55) is selected in such a manner that a number (55) of data packets (43) are selected from the transmission signal (18) in the predetermined time window (63) and are transmitted by the transmission signal (18) in the time window (63) with the highest signal strengths (52).

4.  Method according to Claim 2 or 3, wherein the data packets (43) are first of all filtered on the basis of the minimum signal strength (54) dependent on the processing load (59) and are then filtered on the basis of a further minimum signal strength (55) based on the standard value.

5.  Method according to Claim 4, wherein the further minimum signal strength (55) is greater than the minimum signal strength (54).

6.  Method according to one of the preceding claims, wherein the minimum signal strength (54, 55) has an absolute maximum in its value.

7.  Receiver (16) for a vehicle (3) for receiving messages (17) packaged in data packets (43) with a transmission signal (18) in a vehicle ad hoc network (1), comprising:

    - an antenna (19) for receiving the transmission signal (18),
    - a filter device (45, 47, 48) designed to carry out a method according to one of the preceding claims for filtering at least some of the data packets (43) from the transmission signal (18), and
    - a presentation device (46) designed to extract the messages (17) from the filtered data packets (50).


**Revendications**

1.  Procédé pour filtrer un signal de transmission (18) transmis dans un réseau ad-hoc de véhicule (1), lequel transporte au moins des données de position (12) sur des abonnés (3, 5, 8) dans des paquets de données (43), comprenant :

    - la réception (19) du signal de transmission (18),
    - le filtrage (45, 47, 48) des paquets de données (43) issus du signal de transmission (18) sur la base d'un filtre de réception (45) avec une prescription de filtrage de réception prédéterminée destinée à démoduler les paquets de données (45) issus du signal de transmission (18) et une condition (54, 55) prédéterminée supplémentaire, et
    - la délivrance des paquets de données (50) filtrés à un dispositif de traitement de données (13, 46) de niveau supérieur au filtre de réception (45), la condition (54, 55) prédéterminée comprenant une intensité de signal minimale (54, 55) que doit posséder le signal de transmission (18) à l'endroit du paquet de données (43) à démoduler,

    **caractérisé en ce que** l'intensité de signal minimale (54, 55) est dépendante d'une charge de traitement (59) du filtre de réception (45) et/ou d'une charge de traitement (59) du dispositif de traitement de données (13, 46).

**2.** Procédé selon la revendication 1, l'intensité de signal minimale (54, 55) étant dépendante d'au moins une valeur normalisée pour le signal de transmission (18) dans une fenêtre temporelle (63) prédéterminée.

**3.** Procédé selon la revendication 1 ou 2, l'intensité de signal minimale (54, 55) étant choisie de telle sorte qu'un nombre (55) de paquets de données (43) est sélectionné dans la fenêtre temporelle (63) prédéterminée depuis le signal de transmission (18), lesquels sont transmis par le signal de transmission (18) dans la fenêtre temporelle (63) avec les intensités de signal (52) les plus élevées.

**4.** Procédé selon la revendication 2 ou 3, les paquets de données (43) étant tout d'abord filtrés sur la base de l'intensité de signal minimale (54) dépendante de la charge de traitement (59) et ensuite en se basant sur une intensité de signal minimale (55) supplémentaire rapportée à la valeur normalisée.

**5.** Procédé selon la revendication 4, l'intensité de signal minimale (55) supplémentaire étant supérieure à l'intensité de signal minimale (54).

**6.** Procédé selon l'une des revendications précédentes, l'intensité de signal minimale (54, 55) possédant, dans sa valeur, un maximum absolu.

**7.** Récepteur (16) pour un véhicule (3) destiné à recevoir des messages (17) emballés dans des paquets de données (43) avec un signal de transmission (18) dans un réseau ad-hoc de véhicule (1), comprenant :

- une antenne (19) destinée à recevoir le signal de transmission (18),
- un arrangement de filtrage (45, 47, 48), réalisé pour mettre en œuvre un procédé selon l'une des revendications précédentes pour filtrer au moins une partie des paquets de données (43) issus du signal de transmission (18), et
- un arrangement de représentation (46), réalisé pour extraire les messages (17) hors des paquets de données filtrés (50).

**Fig. 1**

Fig. 2

**Fig. 3**

EP 3 036 728 B1

Fig. 4

**Fig. 5**

EP 3 036 728 B1

**Fig. 6**

EP 3 036 728 B1

Fig. 7b

Fig. 7a

**Fig. 8a**

**Fig. 8b**

EP 3 036 728 B1

Fig. 9a

**Fig. 9b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010139526 A1
- US 20130083679 A1
- DE 102004030994 A1
- DE 102011080789 A1